# EUROPEAN PATENT SPECIFICATION

(11) **EP 2 680 459 B1**
(45) Date of publication and mention of the grant of the patent: **31.08.2016**
(21) Application number: 11859460.5
(22) Date of filing: 26.12.2011
(51) Int. Cl.: H04B 7/005, H04W 76/04, H04W 52/02, H04W 52/44, H04W 52/32

(54) **METHOD AND SYSTEM FOR THE BASE STATION POWER SAVING**
VERFAHREN UND SYSTEM ZUR ENERGIEEINSPARUNG BEI EINER BASISSTATION
PROCÉDÉ ET SYSTÈME PERMETTANT D'ÉCONOMISER L'ÉNERGIE CONSOMMÉE PAR UNE STATION DE BASE

(30) Priority: 23.02.2011 CN 201110044019
(43) Date of publication of application: 01.01.2014
(73) Proprietor: ZTE Corporation, Shenzhen, Guangdong 518057 (CN)
(72) Inventor: HAO, Ruijing, Shenzhen Guangdong 518057 (CN); WANG, Xinhui, Shenzhen Guangdong 518057 (CN); WANG, Cong, Shenzhen Guangdong 518057 (CN); YANG, Lin, Shenzhen Guangdong 518057 (CN); SHEN, Zhenghui, Shenzhen Guangdong 518057 (CN); KUANG, Zhendong, Shenzhen Guangdong 518057 (CN)
(74) Representative: Lavoix
(86) International application number: PCT/CN2011/084677
(87) International publication number: WO 2012/113261

(56) References cited:
- WO-A2-96/21987
- CN-A- 101 595 668
- CN-A- 101 938 822
- US-A1- 2007 191 051
- US-B1- 6 738 365

## Description

### TECHNICAL FIELD

The present disclosure relates to base station power saving techniques, and in particular to a method and system for implementing base station power saving by reducing transmit power of a Broadcast Control CHannel (BCCH) carrier in a Global System of Mobile Communications (GSM) network.

### BACKGROUND

Under a general circumstance, channels which can be configured on a BCCH carrier include: a BCCH, a Common Control CHannel (CCCH), and a Traffic Channel (TCH), all of which occupy 8 Time Slots (TS). These channels will now be described respectively.

The BCCH, which is a control channel in the GSM system, is transmitted in a unidirectional broadcast form from a base station to a mobile station periodically, and contains a system message, a cell identifier, and the like, and the mobile station measures a signal strength and identifies the cell identifier and the like through the BCCH carrier. The BCCH is generally configured with one time slot.

The CCCH is a bidirectional control channel which carries a control signaling and information required for link connection in a call-connection stage, and is generally configured with one time slot.

The TCH is a traffic channel for carrying voice and data traffic, and may be configured with multiple time slots.

Discontinuous Transmission (DTX) is defined as a transmission mode. During a conversation, a user does not have traffic information to be transmitted at all the time. Therefore, a base station encoder may detect a silent period between traffic intervals, and stop transmitting a wireless signal when there is no traffic signal being transmitted, in order to reduce interference and improve system efficiency.

In the related art, the BCCH carrier is always transmitted continuously in all time slots, and the BCCH carrier modulated by using Gaussian Filtered Minimum Shift Keying (GMSK) is transmitted at a maximum power in each time slot, so as to allow all users in a cell to receive the system message and a paging message to guarantee coverage of the cell.

However, how to reduce power loss of the base station has always been a problem operators expect to solve. And power consumption generated by transmitting the BCCH carrier at the maximum power in each time slot is considered to be one of the major sources causing a high energy efficiency of the base station. Therefore, currently, there is an urgent need for a base station power saving solution which is capable of both optimizing the power consumption on the BCCH carrier or minimizing its influence on the power consumption of the base station, and maintaining an operating performance of the whole network.

US 2007/0191051 A1 discloses a solution for power efficient transmission in a wireless telecommunication system. The telecommunication system utilizes a time slot based data transmission scheme. According to the provided solution, at least a portion of time slots is allocated to a broadcast control channel on a given frequency and to at least one different channel. The transmit power levels of the time slot or time slots allocated to another channel or other channels than the broadcast control channel are then adjusted on the basis of contents of the time slots. The broadcast signal is then transmitted with a given transmit power level on a time slot allocated to the broadcast control channel, and a signal or signals on other time slots are transmitted with the adjusted transmit power level.

US 6,738,365 B1 discloses a method of improving connection quality and system capacity in a cellular radio system. Each cell in the cellular radio system has at least one base station (BS) communicating with subscriber terminals (MS) in its area. The method is characterized in that the subscriber terminal transmits in two time slots and receives in two time slots during one frame, and that the subscriber terminal employs the time slots of the frame following the frame used for transmission and reception for measuring neighboring base stations. Owing to the method and cellular radio system, methods developed for improving connection quality and system capacity in a cellular radio system, such as frequency hopping, discontinuous transmission and power control, can be used on the traffic channels of the base station BCCH carrier wave frequency.

WO 96/21987 discloses a wireless local loop system comprising base stations and an access network node which connects the cordless terminal equipments (T) to the exchange of the fixed network. The air interface between the cordless terminal equipment and the base station (2, 3) is mainly in accordance with the GSM mobile system, whereupon at least one time slot (TN0) of a frame having a carrier that is the carrier (c0) of signalling is a time slot of a control channel (FCCH, SCH, BCCH, CCCH), in which time slot the base station transmits, with constant power, control information intended for the cordless terminal equipments. According to the invention, the co-channel interference can be decreased in such a way that the other time slots (TN 1, ... , TN7) of said frame are reserved as traffic channel time slots only as the need arises, and in traffic channel use the transmit power of the signalling carrier (c0) is adjusted in a manner required by the mobile system. Discontinuous transmission DTX can also be used.

### SUMMARY

In view of the above, the main objective of the disclosure is to provide a method and system for implementing base station power saving, capable of both optimizing the power consumption on the BCCH carrier or minimizing its influence on the power consumption of the base station, and maintaining an operating performance of the whole network.

The features of the method and system according to the present disclosure are defined in the independent claims, and the preferable features according to the present invention are defined in the dependent claims.

With the present disclosure, when performing a transmit power planning of a BCCH carrier, a transmit power of a channel configured on the BCCH carrier on part of time slots is reduced by determining whether a traffic channel is in an idle state or whether the traffic channel in a non-idle state is in a DTX silent period. With the present disclosure, as the transmit power can be reduced according to a demand on the planned part of time slots, the power consumption on the BCCH carrier can be optimized or its influence on the power consumption of the base station can be minimized while maintaining an operating performance of the whole network.

### BRIEF DESCRIPTION OF THE DRAWINGS

Fig. 1 is the schematic diagram of channel, time slot, and power configuration on the BCCH carrier according to Embodiment 1 of the present disclosure;
Fig. 2 is the flowchart of implementing base station power saving according to Embodiment 1 of the present disclosure;
Fig. 3 is the schematic diagram of a channel, time slot, and power configuration on the BCCH carrier according to Embodiment 2 of the present disclosure;
Fig. 4 is the flowchart of implementing base station power saving according to Embodiment 2 of the present disclosure;
Fig. 5 is the schematic diagram of a channel, time slot, and power configuration on the BCCH carrier according to Embodiment 3 of the present disclosure;
Fig. 6 is the flowchart of implementing base station power saving according to Embodiment 3 of the present disclosure.

### DETAILED DESCRIPTION

According to various embodiments of the present disclosure, a transmit power planning is performed for a BCCH carrier, including: determining whether a traffic channel is in an idle state; when the traffic channel is in a non-idle state, determining whether the traffic channel is in a DTX silent period; and reducing a transmit power of a channel configured on the BCCH carrier in some of time slots when the traffic channel is in an idle state or the traffic channel is in an non-idle state and in a DTX silent period .

The implementation of the technical solution is further elaborated below with reference to the figures.

Given that three channels, namely, BCCH, CCCH and TCH, are generally configured on the BCCH carrier, the TCH therein, in one case, may be in the idle state at certain periods, and no wireless signal needs to be transmitted in the idle state, for example, no wireless signal needs to be transmitted by a base station in a low telephone traffic period at night; thus it is possible to reduce the power consumption of the base station. In another case, if a DTX mode is turned on for the TCH, as in the DTX silent period when no traffic signal needs to be transmitted, no wireless signal needs to be transmitted by the base station either, and thus it is also possible to reduce the power consumption of the base station. Thus, based on these possibilities, instead of transmission at the maximum power regardless of a circumstance like in the related art, the present disclosure reduces a transmit power consumption by detecting and determining whether the TCH is in either of the two cases, thus serving to save power for the base station (in other words, minimize the power consumption of the base station).

A method for implementing base station power saving, mainly includes the following content:
when performing a transmit power planning of a BCCH carrier, a transmit power of a channel configured on the BCCH carrier on part of time slots is reduced by determining whether a traffic channel is in an idle state or whether the traffic channel in a non-idle state is in a DTX silent period.

Further, for a time slot requiring continuous transmission, such as the time slot in which the BCCH or the CCCH is located, and the time slot reserved for such a channel, continuous transmission at the maximum power will still be performed on the BCCH carrier.

For the time slot in which the TCH is located, in one case, when the TCH is in the idle state, the transmit power of the BCCH carrier is reduced. In another case, when the TCH is in the non-idle state (i.e. with traffic transmission) and turns on the DTX mode, if the TCH is in the DTX silent period, the transmit power of the BCCH carrier is reduced, and if the TCH is in a DTX active period, the BCCH carrier is transmitted at full power (i.e. at the maximum power), or a transmit power reduction amount in transmitting the wireless signal through the BCCH carrier is determined by using an existing power control algorithm.

The channel which is not on the BCCH carrier is not affected by the technical solution, and is not discussed in the present disclosure.

Further, the specific transmit power reduction amount X (dB) of the BCCH carrier, needs to be decided according to different carrier modulation schemes. Table 1 below gives example recommended values. Table 1 shows the values of power reduction on the BCCH carrier modulated by using different schemes. In addition, note that X is the power reduction amount on the BCCH carrier. In order to simplify the follow-up description, the specific value of reduction used in reducing the transmit power of the BCCH carrier is represented by "reduction by X dB".

**Table 1**

| | modulation way | power reduction amount X on BCCH carrier |
|---|---|---|
| 1 | GMSK | 2 dB |
| 2 | 8PSK | 4 dB |
| 3 | QPSK | 4 dB |
| 4 | 16QAM | 6 dB |
| 5 | 32QAM | 6 dB |

To sum up, the present disclosure can prevent the problem of a high power consumption of the base station caused by full power transmitting on the carrier on some idle time slots and during the DTX silent period of a non-idle time slot on the BCCH carrier of the related art. By performing a transmit power planning of the BCCH carrier of an existing GSM wireless communication system, i.e. detecting and determining whether the TCH is in the idle state, or whether the TCH in the non-idle state is in the DTX silent period, the transmit power of the channel configured on the BCCH carrier in some of the time slots is reduced, such that the goal of saving power for the base station is achieved without dramatic decline of an operating performance parameter such as a voice quality and a network indicator of the whole network.

The present disclosure is illustrated below with embodiments.
Embodiment 1: for the time slot in which the BCCH or the CCCH is located, and the time slot reserved for such a channel, the BCCH carrier will still be transmitted continuously at the maximum power. For the time slot in which the TCH is located, when the TCH is in the idle state, the BCCH carrier is transmitted with a power reduction by X dB; when the TCH has traffic transmission, the BCCH carrier will still be transmitted continuously at the maximum power.

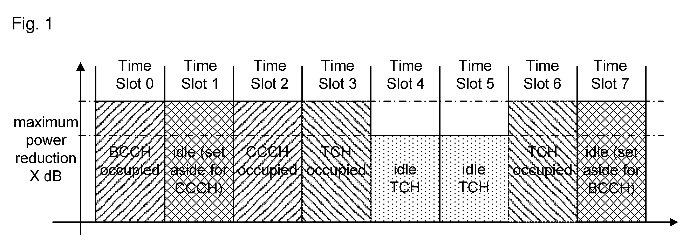

   Fig.1 is the schematic diagram of channel, time slot, and power configuration on the BCCH carrier according to the present embodiment. One cell ZGS001 is configured with three carriers (TRX) and the DTX mode is turned on, wherein the first carrier TRX1 is a BCCH carrier. The configuration of eight time slots (TSO~TS7) on the carrier, as shown in Fig.1, is described as follows:
   TS0 is configured for a BCCH;
   TS1 is an idle time slot and is reserved for a CCCH;
   TS2 is configured for a CCCH;
   TS3 is configured for a TCH and is in a transmission state;
   TS4 is configured for a TCH and is in an idle state;
   TS5 is configured for a TCH and is in an idle state;
   TS6 is configured for a TCH and is in a transmission state;
   TS7 is an idle time slot and is reserved for a BCCH.

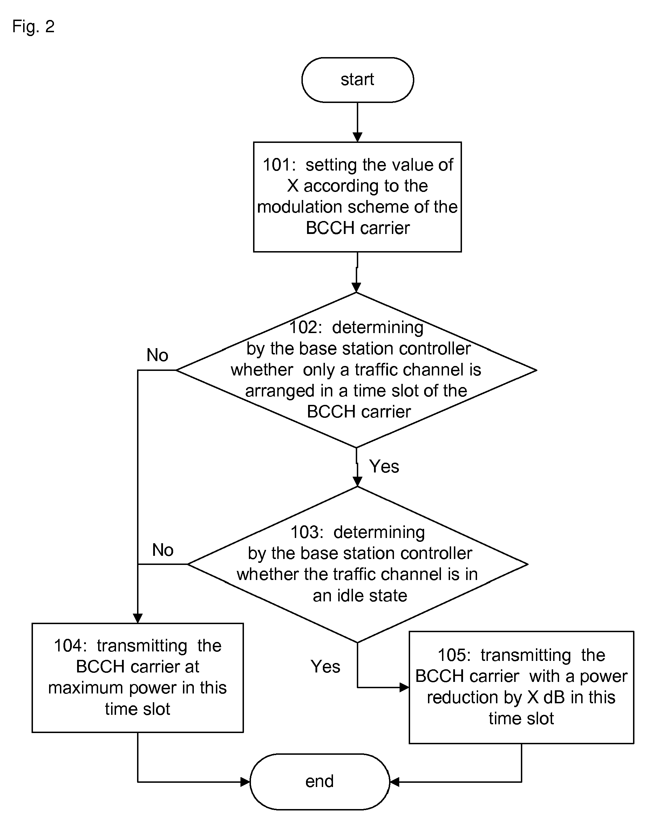

   In the cell ZGS001, the BCCH carrier is transmitted at the maximum transmit power in TS0, TS1, TS2, TS3, TS6 and TS7, while the BCCH carrier is transmitted with a power reduction by X dB in TS4 and TS5.
   It may be observed from Fig.1 that by utilizing the present disclosure, the BCCH carrier is transmitted with a power reduction by X dB in both TS4 and TS5, which reduces the average transmit power of the BCCH carrier to a certain extent, thus saving the power consumption of the base station. When all of the TCHs on the BCCH carrier of the base station are in the idle state, the maximum power-saving effect could be achieved by utilizing the solution of the present disclosure; When part of the TCHs on the BCCH carrier of the base station are in an occupied state, the base-station-power-saving effect may still be achieved by utilizing the solution of the present disclosure.
   The flowchart of a base station power saving solution corresponding to the aforementioned channel configuration on the BCCH carrier of the base station according to the present embodiment, as shown in Fig. 2, includes the following steps.
   Step 101: a base station controller sets a value of X according to a modulation scheme of a BCCH carrier;
   Step 102: the base station controller determines whether only a traffic channel is configured in a time slot of the BCCH carrier: if yes, the flow goes to step 103; otherwise it means that a channel of another type or a channel reserved for a channel of another type is configured, then the flow goes to step 104;
   Step 103: the base station controller determines whether the traffic channel is in an idle state: if so, the flow goes to step 105; otherwise the flow goes to step 104;
   Step 104: a wireless signal is transmitted at a maximum power in this time slot of the BCCH carrier, and the current flow ends;
   Step 105: transmit power for transmitting a wireless signal on the BCCH carrier in the time slot is reduced by X dB.
Embodiment 2: for the time slot in which the BCCH or the CCCH is located, and the time slot reserved for such a channel, the BCCH carrier will still be transmitted continuously at the maximum power. For the time slot in which the TCH is located, when the TCH is in the idle state, the BCCH carrier is transmitted with a power reduction by X dB; when the TCH has traffic transmission and the DTX mode is turned on, the BCCH carrier is transmitted with a power reduction by X dB if the TCH is in the DTX silent period.

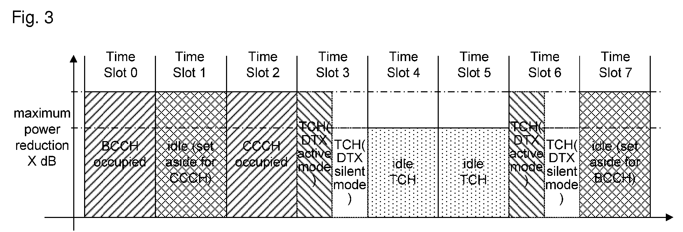

   Fig.3 is the schematic diagram of channel, time slot, and power configuration on the BCCH carrier according to the present embodiment. One cell ZGS001 is configured with three carriers (TRX) and the DTX mode is turned on, wherein the first carrier TRX1 is a BCCH carrier. The configuration of eight time slots (TSO~TS7) on the carrier, as shown in Fig.3, is described as follows:
   TS0 is configured for a BCCH;
   TS1 is an idle time slot and is reserved for a CCCH;
   TS2 is configured for a CCCH;
   TS3 is configured for a TCH and is in a transmission state;
   TS4 is configured for a TCH and is in an idle state;
   TS5 is configured for a TCH and is in an idle state;
   TS6 is configured for a TCH and is in a transmission state;
   TS7 is an idle time slot and is reserved for a BCCH.

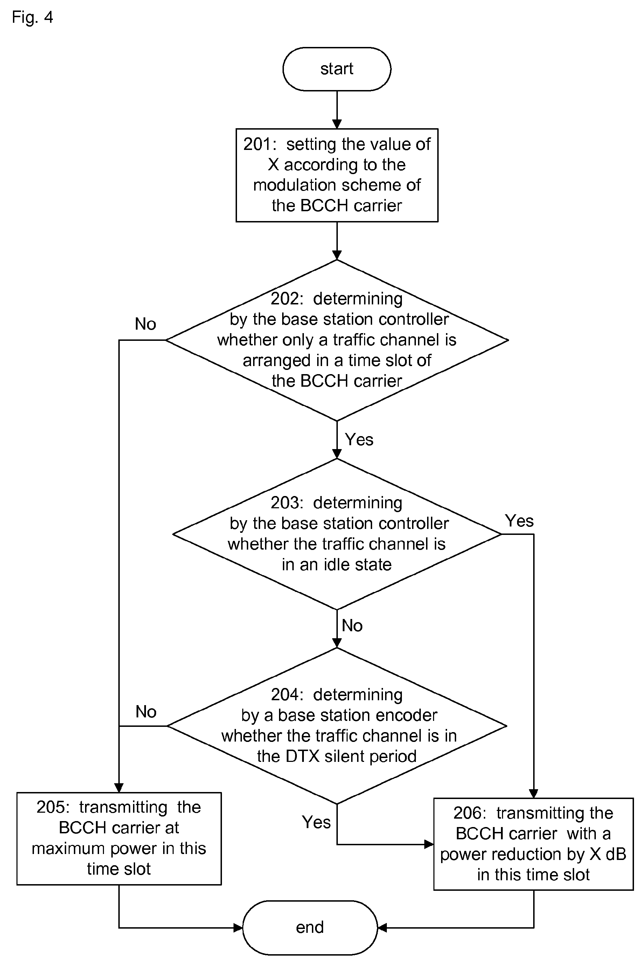

   In the cell ZGS001, the BCCH carrier is transmitted at the maximum transmit power in TS0, TS1, TS2 and TS7. The BCCH carrier is transmitted with a power reduction by X dB in TS4 and TS5. In TS3 and TS6, when the base station is in the DTX mode, the BCCH carrier is transmitted at the maximum transmit power; when the base station is in the DTX silent mode, the BCCH carrier is transmitted with a power reduction by X dB.
   It may be observed from Fig.3 that by utilizing the present disclosure, the BCCH carrier is transmitted with a power reduction by X dB in both TS4 and TS5. In addition, during the DTX silent periods of TS3 and TS6, the BCCH carrier is transmitted with a power reduction by X dB as well. As a result, the average transmit power of the BCCH carrier is reduced to a certain extent, thus saving the power consumption of the base station. When all of the TCHs on the BCCH carrier of the base station are in the idle state, the maximum power-saving effect (which is the same as that of the solution of Embodiment 1) could be achieved by utilizing the solution of the present disclosure; when all or part of the TCHs on the BCCH carrier of the base station are in an occupied state, the base-station-power-saving effect (better than that of the solution of Embodiment 1) may still be achieved by utilizing the solution of the present disclosure. Overall, in the same load state of the base station, the power-saving effect achieved by Embodiment 2 is better than that by the solution of Embodiment 1.
   The flowchart of a base station power saving solution corresponding to the aforementioned channel configuration on the BCCH carrier of the base station according to the present embodiment, as shown in Fig.4, includes the following steps.
   Step 201: a base station controller sets a value of X according to a modulation scheme of a BCCH carrier;
   Step 202: the base station controller determines whether only a traffic channel is configured in a time slot of the BCCH carrier: if yes, the flow goes to step 203; otherwise it means that a channel of another type or a channel reserved for a channel of another type is configured, then the flow goes to step 205;
   Step 203: the base station controller determines whether the traffic channel is in an idle state: if so, the flow goes to step 206; otherwise the flow goes to step 204;
   Step 204: a base station encoder determines whether the traffic channel is in a DTX silent period: if so, the flow goes to step 206; otherwise the flow goes to step 205;
   Step 205: a wireless signal is transmitted at a maximum power in this time slot of the BCCH carrier, and the current flow ends;
   Step 206: transmit power for transmitting a wireless signal on the BCCH carrier in the time slot is reduced by X dB.
Embodiment 3: for the time slot where the BCCH or the CCCH is located, and the time slot reserved for such a channel, the BCCH carrier will still transmit continuously with the maximum power. For the time slot where the TCH is located, when the TCH is in the idle state, the BCCH carrier transmits with a power reduction by X dB; when the TCH has traffic transmission and the DTX mode is turned on, the BCCH carrier transmits with a power reduction by X dB if the TCH is in the DTX silent period; if the TCH is in a DTX active period, the transmit power of the BCCH carrier is decided by an existing power control algorithm.

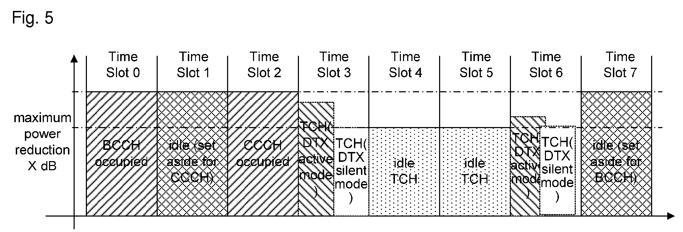

   Fig.5 is the schematic diagram of channel, time slot, and power configuration on the BCCH carrier according to the present embodiment. One cell ZGS001 is configured with three carriers (TRX) and the DTX mode is turned on, the first carrier TRX1 is a BCCH carrier. The configuration of eight time slots (TSO~TS7) on the carrier, as shown in Fig.5, is described as follows:
   TS0 is configured for a BCCH;
   TS1 is an idle time slot and is reserved for a CCCH;
   TS2 is configured for a CCCH;
   TS3 is configured for a TCH and is in a transmission state;
   TS4 is configured for a TCH and is in an idle state;
   TS5 is configured for a TCH and is in an idle state;
   TS6 is configured for a TCH and is in a transmission state;
   TS7 is an idle time slot and is reserved for a BCCH.

In the cell ZGS001, the BCCH carrier is transmitted at the maximum transmit power in TS0, TS1, TS2 and TS7. The BCCH carrier is transmitted with a power reduction by X dB in TS4 and TS5. In TS3 and TS6, when the base station is in the DTX silent mode, the BCCH carrier is transmitted with a power reduction by X dB; when the base station is in a DTX active mode, the transmit power of the BCCH carrier is determined by using an existing power control algorithm.

It may be observed from Fig.5 that by utilizing the present disclosure, the BCCH carrier transmits with a power reduction by X dB on both TS4 and TS5. During the DTX silent periods of TS3 and TS6, the BCCH carrier transmits with a power reduction by X dB as well. During the DTX active periods of TS3 and TS6, the transmit power of the BCCH carrier also drops by up to X dB. As a result, the average transmit power of the BCCH carrier is reduced to a certain extent, thus saving the power consumption of the base station. When all of the TCHs on the BCCH carrier of the base station are in the idle state, the maximum power-saving effect (which is the same as that of the solutions of Embodiment 1 and Embodiment 2) could be achieved by utilizing the solution of the present disclosure; when all or part of the TCHs on the BCCH carrier of the base station are in an occupied state, the base-station-power-saving effect (better than that of the solutions of Embodiment 1 and Embodiment 2) may still be achieved by utilizing the solution of the present disclosure. Overall, in the same load state of the base station, the power-saving effect achieved by Embodiment 3 is better than that by the solutions of Embodiment 1 and Embodiment 2.

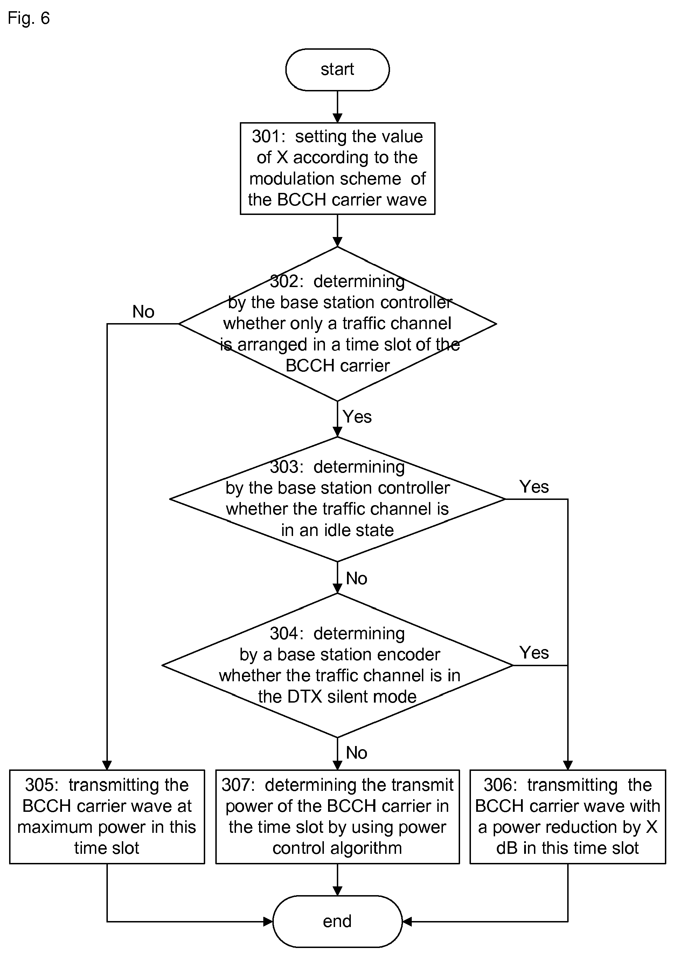

The flowchart of a base station power saving solution corresponding to the aforementioned channel configuration on the BCCH carrier of the base station according to the present embodiment, as shown in Fig.6, includes the following steps.
Step 301: a base station controller sets a value of X according to a modulation scheme of a BCCH carrier;
Step 302: the base station controller determines whether only a traffic channel is configured in a time slot of the BCCH carrier: if yes, the flow goes to step 303; otherwise it means that a channel of another type or a reserved channel for the channel of another type is configured, then the flow goes to step 305;
Step 303: the base station controller determines whether the traffic channel is in an idle state: if so, the flow goes to step 306; otherwise the flow goes to step 304;
Step 304: a base station encoder determines whether the traffic channel is in a DTX silent period: if so, the flow goes to step 306; otherwise the flow goes to step 307;
Step 305: a wireless signal is transmitted at a maximum power in this time slot of the BCCH carrier, and the current flow ends;
Step 306: transmit power for transmitting a wireless signal on the BCCH carrier in the time slot is reduced by X dB, and the current flow ends;
Step 307: the transmit power in transmitting a wireless signal by the BCCH carrier on the time slot is determined by using an existing power control algorithm.

A system for implementing base station power saving includes a power reduction control unit configured to, when performing a transmit power planning of a BCCH carrier, reduce a transmit power of a channel configured on the BCCH carrier on part of time slots by determining whether a traffic channel is in an idle state or whether the traffic channel in a non-idle state is in a DTX silent period. Three specific implementations of the power reduction control unit are elaborated below.
Specific Implementation 1: the power reduction control unit is further configured to, in the case that only the traffic channel is configured in a time slot of the BCCH carrier, when determining that the traffic channel is in the idle state, reduce the transmit power in the time slot of the BCCH carrier in which a wireless signal is transmitted according to a set power reduction amount of the BCCH carrier.
Specific Implementation 2: the power reduction control unit is further configured to, in the case that only the traffic channel is configured in a time slot of the BCCH carrier, when determining that the traffic channel is in the non-idle state, and the traffic channel is in the DTX silent period, reduce the transmit power in the time slot of the BCCH carrier in which a wireless signal is transmitted according to a set power reduction amount of the BCCH carrier.
Specific Implementation 3: the power reduction control unit is further configured to, in the case that only the traffic channel is configured in a time slot of the BCCH carrier, when determining that the traffic channel is in the non-idle state, and the traffic channel is in a DTX active period, determine the transmit power reduction amount in the time slot of the BCCH carrier in which a wireless signal is transmitted by using a set power control algorithm.

What are described are merely preferred embodiments of the present disclosure and are not intended to limit the scope of the present disclosure.

## Claims

1. A method for implementing base station power saving, **characterized in that** the method comprises: when performing a transmit power planning for a Broadcast Control Channel BCCH carrier,
setting a value X according to a modulation scheme of the BCCH carrier (101, 201, 301);
determining whether only a traffic channel is configured in a time slot of the BCCH carrier (102, 202, 302);
when only a traffic channel is configured in a time slot of the BCCH carrier, determining whether the traffic channel is in an idle state (103, 203, 303) or a discontinuous transmission DTX silent period (204, 304);
when the traffic channel is in an idle state or a DTX silent period, reducing transmit power for transmitting a wireless signal on the BCCH carrier in the time slot by X dB (105, 206, 306).

2. The method according to claim 1, further comprising: otherwise when the traffic channel is not in an idle state or a DTX silent period, reducing the transmit power for transmitting a wireless signal on the BCCH carrier in the time slot by a value less than X dB.

3. A system for implementing base station power saving, **characterized in that** the system comprises a power reduction control unit configured, when performing a transmit power planning for a Broadcast Control Channel BCCH carrier,
to set a value X according to a modulation scheme of the BCCH carrier;
to determine whether only a traffic channel is configured in a time slot of the BCCH carrier;
when only a traffic channel is configured in a time slot of the BCCH carrier, to determine whether the traffic channel is in an idle state or a discontinuous transmission DTX silent period;
when the traffic channel is in an idle state or a DTX silent period, to reduce transmit power for transmitting a wireless signal on the BCCH carrier in the time slot by X dB.

4. The system according to claim 3, wherein the power reduction control unit is further configured to, when only a traffic channel is configured in the time slot and the traffic channel is not in an idle state or a DTX silent period, reduce the transmit power for transmitting a wireless signal on the BCCH carrier in the time slot by a value less than X dB.

## Patentansprüche

1. Verfahren zur Implementierung einer Energieeinsparung bei einer Basisstation, **dadurch gekennzeichnet, dass** das Verfahren Folgendes umfasst: bei der Durchführung einer Sendeleistungsplanung für einen Rundfunksteuerkanal BCCH-Träger
Einstellung eines Werts X gemäß einem Modulationsschema des BCCH-Trägers (101, 201, 301);
Bestimmung, ob nur ein Verkehrskanal in einem Zeitschlitz des BCCH-Trägers (102, 202, 302) konfiguriert ist;
wenn nur ein Verkehrskanal in einem Zeitschlitz des BCCH-Trägers konfiguriert ist, Bestimmung, ob sich der Verkehrskanal in einem Ruhezustand (103, 203, 303) oder einer diskontinuierlichen Sende-DTX-Funkstille (204, 304) befindet;
wenn sich der Verkehrskanal in einem Ruhezustand oder einer DTX-Funkstille befindet, Reduzierung der Sendeleistung zum Senden eines Funksignals auf dem BCCH-Träger im Zeitschlitz durch X dB (105, 206, 306).

2. Verfahren nach Anspruch 1, weiter umfassend: ansonsten, wenn sich der Verkehrskanal nicht in einem Ruhezustand oder einer DTX-Funkstille befindet, Reduzierung der Sendeleistung zum Senden eines Funksignals auf dem BCCH-Träger im Zeitschlitz durch einen Wert von weniger als X dB.

3. System zur Implementierung einer Energieeinsparung bei einer Basisstation, **dadurch gekennzeichnet, dass** das System eine Leistungsreduzierungssteuereinheit umfasst, die, bei der Durchführung einer Sendeleistungsplanung für einen Rundfunksteuerkanal BCCH-Träger, konfiguriert ist,
um einen Wert X gemäß einem Modulationsschema des BCCH-Trägers einzustellen;
um zu bestimmen, ob nur ein Verkehrskanal in einem Zeitschlitz des BCCH-Trägers konfiguriert ist;
wenn nur ein Verkehrskanal nur in einem Zeitschlitz des BCCH-Trägers konfiguriert ist, um zu bestimmen, ob sich der Verkehrskanal in einem Ruhezustand oder einer diskontinuierlichen Sende-DTX-Funkstille befindet;
wenn sich der Verkehrskanal in einem Ruhezustand oder einer DTX-Funkstille befindet, um die Sendeleistung zu reduzieren, um ein Funksignal auf dem BCCH-Träger im Zeitschlitz durch X dB zu senden.

4. System nach Anspruch 3, wobei die Leistungsreduzierungssteuereinheit weiter konfiguriert ist, um, wenn nur ein Verkehrskanal im Zeitschlitz konfiguriert ist, und wenn sich der Verkehrskanal nicht in einem Ruhezustand oder einer DTX-Funkstille befindet, die Sendeleistung zum Senden eines Funksignals auf dem BCCH-Träger im Zeitschlitz durch einen Wert von weniger als X dB zu reduzieren.

## Revendications

1. Procédé pour mettre en oeuvre l'économie d'énergie d'une station de base, **caractérisé en ce que** le procédé comprend : lors de l'exécution d'une planification de puissance de transmission pour une porteuse de canal de contrôle de diffusion BCCH,
l'établissement d'une valeur X conformément à une méthode de modulation de la porteuse de BCCH (101, 201, 301) ;
la détermination si seulement un canal de trafic est configuré dans une tranche de temps de la porteuse de BCCH (102, 202, 302) ;
lorsque seulement un canal de trafic est configuré dans une tranche de temps de la porteuse de BCCH, la détermination si le canal de trafic est dans un état inoccupé (103, 203, 303) ou une période de silence de transmission discontinue DTX (204, 304) ;
lorsque le canal de trafic est dans un état inoccupé ou une période de silence de DTX, la réduction de la puissance de transmission pour transmettre un signal sans fil sur la porteuse de BCCH dans la tranche de temps de X dB (105, 206, 306).

2. Procédé selon la revendication 1, comprenant en outre : autrement, lorsque le canal de trafic n'est pas dans un état inoccupé ou une période de silence de DTX, la réduction de la puissance de transmission pour la transmission d'un signal sans fil sur la porteuse de BCCH dans la tranche de temps d'une valeur inférieure à X dB.

3. Système pour mettre en oeuvre l'économie d'énergie d'une station de base, **caractérisé en ce que** le système comprend une unité de commande de réduction de puissance configurée, lors de l'exécution d'une planification de puissance de transmission pour une porteuse de canal de contrôle de diffusion BCCH,
pour établir une valeur X conformément à une méthode de modulation de la porteuse de BCCH ;
pour déterminer si seulement un canal de trafic est configuré dans une tranche de temps de la porteuse de BCCH ;
lorsque seulement un canal de trafic est configuré dans une tranche de temps de la porteuse de BCCH, pour déterminer si le canal de trafic est dans un état inoccupé ou une période de silence de transmission discontinue DTX ;
lorsque le canal de trafic est dans un état inoccupé ou une période de silence de DTX, pour réduire la puissance de transmission pour la transmission d'un signal sans fil sur la porteuse de BCCH dans la tranche de temps de X dB.

4. Système selon la revendication 3, dans lequel l'unité de commande de réduction de puissance est en outre configurée pour, lorsque seulement un canal de trafic est configuré dans la tranche de temps et que le canal de trafic n'est pas dans un état inoccupé ou une période de silence de DTX, réduire la puissance de transmission pour la transmission d'un signal sans fil sur la porteuse de BCCH dans la tranche de temps d'une valeur inférieure à X dB.
